# EUROPÄISCHE PATENTANMELDUNG

(11) **EP 3 056 456 A1**
(43) Veröffentlichungstag der Anmeldung: **17.08.2016**
(21) Anmeldenummer: 16000262.2
(22) Anmeldetag: 03.02.2016
(51) Int. Cl.: B65G 45/08, B65G 45/04

(54) **SCHMIERVORRICHTUNG FÜR EIN SCHIENENGESTÜTZTES FÖRDERSYSTEM UND FÖRDERSYSTEM**

(30) Priorität: 12.02.2015 DE 102015001799
(71) Anmelder: Eisenmann SE, 71032 Böblingen (DE)
(72) Erfinder: Hofbauer, Ulrich, 71126 Gäufelden (DE); Riemrich, Eckhard, 72108 Rottenburg (DE); Schurba, Alexander, 71065 Sindelfingen (DE)
(74) Vertreter: Ostertag & Partner Patentanwälte

(57) **Zusammenfassung**

Die vorliegende Erfindung betrifft eine Schmiervorrichtung für ein schienengestütztes Fördersystem (5), wobei die Schmiervorrichtung mindestens eine Applikationsvorrichtung (60, 61, 64, 65, 66, 68, 69) mit mindestens einem Schmierstoffdepot (62, 63a, 63b) aufweist, welche eine mobile Tragstruktur für die Applikationsvorrichtung (60, 61, 64, 65, 66, 68, 69) aufweist, wobei das Schmierstoffdepöt (62, 63a, 63b) als fester Schmierstoff ausgebildet ist, und wobei das Schmierstoffdepot (62, 63a, 63b) druckbelastet angeordnet ist und eine Kontaktoberfläche (58, 58a, 58b) zur Abgabe des festen Schmierstoffs aufweist. Die Erfindung betrifft auch ein Fördersystem (5) mit mindestens einer Kettenschiene (1, 7), entlang der eine Kette (10) geführt ist, welche mit einer derartigen Schmiervorrichtung ausgestattet ist. Erfindungsgemäß werden Schmierstoff bedingte Verschmutzungen reduziert sowie Installation und Inbetriebnahme vereinfacht.

## Beschreibung

Die Erfindung betrifft eine Schmiervorrichtung für ein schienengestütztes Fördersystem, welche mindestens eine Applikationsvorrichtung mit mindestens einem Schmierstoffdepot aufweist.

Die Erfindung betrifft auch ein Fördersystem mit mindestens einer Kettenschiene, entlang der eine Kette geführt ist.

Ein schienengestütztes Fördersystem ist beispielsweise aus der DE 10 2004 061 990 A1 in Form eines Hängebahnsystems zum Transport von Gegenständen bekannt.

Als weiteres Beispiel für ein schienengestütztes Fördersystem offenbart die DE 199 25 836 A1 einen als "Power&Free" bezeichneten Schleppförderer mit einer Tragschiene und mit einer Kettenschiene. An der Tragschiene wird ein mit Tragrollen und mit Führungsrollen versehener Transportwagen geführt. In der Kettenschiene ist dort eine Schleppkette geführt, die eine Vielzahl von Kettenmitnehmern trägt, die mit Mitnehmern des Transportwagens in einer Mitnahmeposition zusammenwirken.

Zur Schmierung derartiger schienengestützter Fördersysteme ist es bekannt, Schmierstationen vorzusehen, wobei ein flüssiger Schmierstoff aus einem Schmierstoffdepot gefördert und mittels einer Applikationsvorrichtung, die als Sprühdüse ausgebildet sein kann, einer definierten Schmierstelle zugeführt wird. Um eine Überschmierung und durch die Schmierung bedingte Verschmutzungen zu vermeiden, erfordern die bekannten Schmierungen für schienengestützte Fördersysteme eine aufwendige Justierung, beispielsweise eine Justierung der zugeführten Schmiermittelmenge beziehungsweise der Sprühdichte.

Aufgabe der vorliegenden Erfindung ist es, eine Schmiervorrichtung und ein Fördersystem der eingangs genannten Art bereitzustellen, die diesen Gedanken Rechnung tragen.

Diese Aufgabe wird bei einer Schmiervorrichtung der eingangs genannten Art dadurch gelöst, dass
a) die Schmiervorrichtung eine mobile Tragstruktur für die Applikationsvorrichtung aufweist;
b) das Schmierstoffdepot als fester Schmierstoff ausgebildet ist, wobei das Schmierstoffdepot druckbelastet angeordnet ist und eine Kontaktoberfläche zur Abgabe des festen Schmierstoffs aufweist.

Durch diese Maßnahmen kann ein Abtropfen von Schmiermittel beim Aufbringen vermieden werden. Auf Schmierstoff zurückzuführende Verschmutzungen werden stark reduziert. Eine aufwendige Ansteuerung und Justierung bei Betrieb, Installation bzw. Wartung ist bei der Erfindung nicht erforderlich. Der Installationsaufwand für ein Schmiersystem wird erfindungsgemäß deutlich reduziert, beispielsweise im Hinblick auf eine elektrische Installation und die Installation von Zuführleitungen für Schmiermittel. Auch die Inbetriebnahme wird vereinfacht.

Mit Vorteil kann die die Applikationsvorrichtung ein Federelement aufweisen, welches das Schmierstoffdepot in Richtung der Kontaktoberfläche druckbelastet. Auf diese Weise kann Schmierstoff bedarfsgerecht zugeführt werden, wobei die Notwendigkeit aufwendiger Steuerungsmaßnahmen entfällt.

In weiterer vorteilhafter Ausgestaltung kann die Applikationsvorrichtung mit einem Bauelement ausgestattet sein, dessen Masse eine Druckbelastung des Schmierstoffdepots in Richtung der Kontaktoberfläche bewirkt.

Um die Tragstruktur entlang einer Schiene eines Fördersystems bewegen zu können, kann es weiterhin günstig sein, dass die Tragstruktur eine oder mehrere Laufflächen aufweist.

Vorzugsweise kann die Kontaktoberfläche des Schmierstoffdepots zumindest teilweise an mindestens einer der ein oder mehreren Laufflächen der Tragstruktur anliegen. Dies ermöglicht, alternativ oder zusätzlich zu einer direkten Schmierung, eine indirekte Schmierung der Schiene eines Fördersystems.

Um eine besonders bedarfsgerechte Schmierung zu ermöglichen, kann die Lage der Applikationsvorrichtung gegenüber der Tragstruktur zwischen mindestens einer Ausgangsposition und mindestens einer Schmierposition veränderbar sein. Somit wird ein flexibler Einsatz der Schmiervorrichtung ermöglicht. Die Schmiervorrichtung kann beispielsweise an unterschiedliche Erfordernisse bzw. Einsatzbereiche angepasst werden.

Vorzugsweise kann die Applikationsvorrichtung gegenüber der Tragstruktur schwenkbar sein. Dies ermöglicht beispielsweise eine besonders geeignete Schmierung in bogenförmigen Schienenabschnitten.

In zweckmäßiger Weiterbildung kann die Tragstruktur zum Einstellen der Lage der Applikationsvorrichtung gegenüber der Tragstruktur einen Führungsstift aufweisen. Hierdurch kann die Schmierwirkung der Applikationsvorrichtung flexibel und mit verhältnismäßig geringem Aufwand eingestellt werden.

Beispielsweise im Hinblick auf den Einsatz in bogenförmigen Schienenabschnitten mit unterschiedlichen Schienenradien kann es günstig sein, eine Lenkstange und eine Aufnahmevorrichtung für das mindestens eine Schmierstoffdepot vorzusehen, wobei der Führungsstift an der Lenkstange angeordnet ist, und wobei die Aufnahmevorrichtung mittels der Lenkstange bewegt werden kann.

Mit Vorteil kann ein Koppelelement vorgesehen sein, in welches der Führungsstift derart eingreift, dass die Lage des Führungsstifts gegenüber der Tragstruktur in Abhängigkeit einer Bewegung der Tragstruktur eingestellt wird. Auf diese Weise kann eine an unterschiedliche Bereiche angepasste Schmierung in besonders günstiger Weise realisiert werden.

Es kann von Vorteil sein, den Führungsstift mit einer Führungsrolle zu versehen, welche in einer stationären Führungsgasse führbar ist. Derart wird eine besonders flexible bereichsbezogene Einstellung der Schmierung ermöglicht.

Vorzugsweise kann die mobile Tragstruktur der Schmiervorrichtung schienengeführt in dem Fördersystem bewegbar ausgebildet sein. Der Aufwand für die Installation stationärer Schmiervorrichtungen entfällt bzw. wird zumindest reduziert. Der Aufwand einer Anpassung bei Änderungen am Fördersystem kann reduziert werden bzw. entfallen.

Es kann zweckmäßig sein, dass die Tragstruktur der Schmiervorrichtung als schienenführbarer Wagen ausgebildet ist.

In einer für die Schmierung einer Kettenschiene günstigen Ausgestaltung kann die Tragstruktur der Schmiervorrichtung als Kettenglied ausgebildet sein.

Die oben genannte Aufgabe wird bei einem Fördersystem der eingangs genannten Art dadurch gelöst, dass die Kette mit einer Schmiervorrichtung ausgestattet ist, die gemäß der Erfindung oder einer Ihrer Ausgestaltungen ausgebildet ist.

Neben bereits erwähnten Vorteilen der Schmiervorrichtung, kann bei einem derartigen Fördersystem ein einheitlicher Schmierstoff für unterschiedliche Temperaturbereiche, beispielsweise für einen Normaltemperaturbereich und für einen Hochtemperaturbereich des Fördersystems verwendet werden. Eine aufwendige Justierung für unterschiedliche Betriebszustände ist nicht erforderlich.

Vorzugsweise kann die mindestens eine Kettenschiene des Fördersystems ein oder mehrere Führungselemente aufweisen, mit deren Hilfe die Lage der Applikationsvorrichtung gegenüber der Tragstruktur einstellbar ist. Eine derartige Führungsanordnung kann mit verhältnismäßig geringem Aufwand installiert, nachgerüstet bzw. verändert werden.

Mit Vorteil kann das Profil der mindestens einen Kettenschiene des Fördersystems eine Führungsöffnung ausbilden, mit deren Hilfe die Lage der Applikationsvorrichtung gegenüber der Tragstruktur einstellbar ist. Derart wird beispielsweise eine besonders kompakte Bauform begünstigt.

Weitere vorteilhafte Ausgestaltungen ergeben sich aus der nachfolgenden Beschreibung. Dabei werden Ausführungsbeispiele der Erfindung, ohne hierauf beschränkt zu sein, an Hand der Zeichnungen näher erläutert. Es zeigen, jeweils in vereinfachter, schematischer Darstellung:
- Figur 1: eine Teilansicht eines Fördersystem gemäß dem Stand der Technik mit einer stationären Schmierstation, mit einer Kettenschiene und mit einer Tragschiene;
- Figur 2: eine Seitenansicht mehrerer Ausführungsformen einer erfindungsgemäßen Schmiervorrichtung und Schienen eines Fördersystems;
- Figur 3: eine Seitenansicht mehrerer Ausführungsformen einer erfindungsgemäßen Schmiervorrichtung und Schienen eines Fördersystems;
- Figur 4: eine Seitenansicht einer Ausführungsform einer erfindungsgemäßen Schmiervorrichtung an einem geraden Abschnitt einer Kettenschiene;
- Figur 4A: eine Draufsicht zur Seitenansicht gemäß Figur 4;
- Figur 4B: eine Draufsicht der in Figur 4 gezeigten Ausführungsform an einem gebogenen Abschnitt der Kettenschiene ;
- Figur 5: eine Seitenansicht einer Ausführungsform einer erfindungsgemäßen Schmiervorrichtung an einem geraden Abschnitt einer Kettenschiene;
- Figur 5A: eine Draufsicht zur Seitenansicht gemäß Figur 5;
- Figur 5B: eine Draufsicht der in Figur 5 gezeigten Ausführungsform der Schmiervorrichtung an einem gebogenen Abschnitt der Kettenschiene ;
- Figur 6A: eine Schnittansicht einer Ausführungsform einer erfindungsgemäßen Schmiervorrichtung an einem geraden Abschnitt einer Kettenschiene;
- Figur 6B: eine Schnittansicht der in Figur 6A gezeigten Ausführungsform der Schmiervorrichtung an einem gebogenen Abschnitt der Kettenschiene ;
- Figur 7: eine Schnittansicht einer Ausführungsform einer erfindungsgemäßen Schmiervorrichtung.

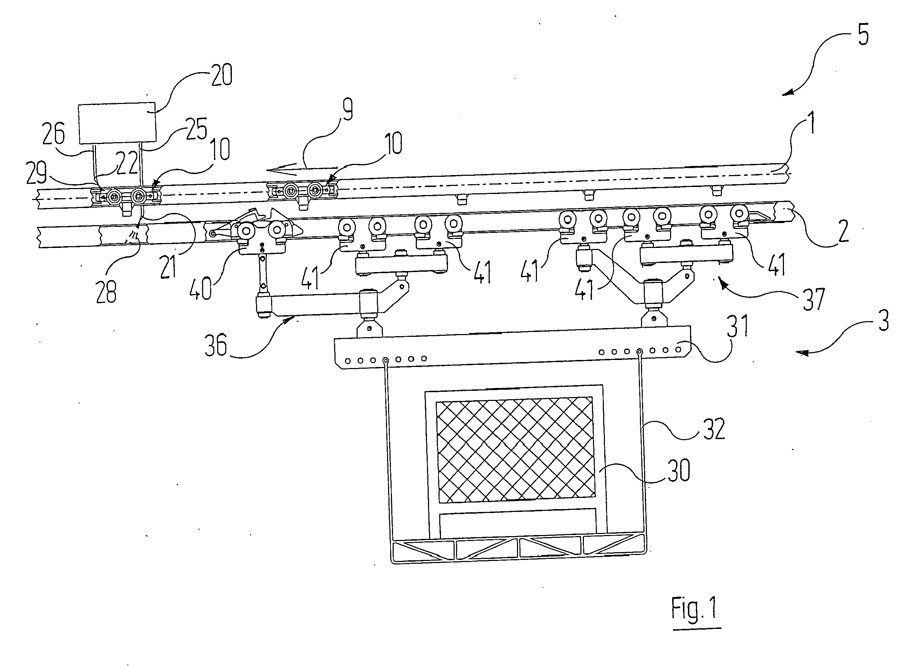

Figur 1 zeigt ein Beispiel für ein schienengestütztes Fördersystem 5 gemäß dem Stand der Technik mit einer Transportvorrichtung 3 zum Transport eines Transportguts 30. Im gezeigten Beispiel ist das Fördersystem 5 als Zweischienen-Fördersystem mit einer Kettenschiene 1 und mit einer Tragschiene 2 ausgebildet.

Gemäß dem Stand der Technik ist zur Schmierung der Schienen 1, 2 des Fördersystems 5 eine stationäre Schmierstation 20 vorgesehen, welche Schmiermittelleitungen 25, 26 aufweist. Mittels einer nicht näher dargestellten Pumpe kann den an Schmierstellen angeordneten Sprühvorrichtungen 21, 22 über die Schmiermittelleitungen 25 bzw. 26 ein flüssiges Schmiermittel 28, 29 zugeführt werden. Das flüssige Schmiermittel 28, 29, beispielsweise Öl oder ein Ölgemisch, tritt an den Sprühvorrichtungen 21, 22 aus und schmiert die Schienen 1 bzw. 2.

Die Transportvorrichtung 3 weist einen Zugwagen 40 und mehrere Trägwagen 41 auf. Die Wagen 40, 41 der Transportvorrichtung 3 werden von einer Tragschiene 2 getragen und sind entlang der Tragschiene 2 bewegbar angeordnet. Der Zugwagen 40 und die Tragwagen 41 weisen jeweils mehrere Tragrollen mit einer horizontalen Achse und jeweils mehrere Führungsrollen mit einer vertikalen Achse auf. Diese Tragrollen und Führungsrollen sind in den Figuren 1 der besseren Übersicht halber nicht mit Bezugszeichen versehen.

Die Transportvorrichtung 3 weist ein Traggestell 32 auf, welches zur Aufnahme eines Transportguts 30 ausgebildet ist, wobei das Traggestell 32 an einer Lasttraverse 31 aufgehängt ist. Die Wagen 40, 41 der Transportvorrichtung 5 bilden einen die Lasttraverse 31 tragenden Wagenzug mit einer Vorläufereinheit 36 und mit einer Nachläufereinheit 37 aus.

Im Beispiel ist entlang der Kettenschiene 1 eine als Zugelement dienende Kette 10 angeordnet, welche über Mitnehmer mit dem Zugwagen 40 koppelbar ist. In gekoppeltem Zustand kann die Transportvorrichtung 3 von der Kette 10 gefördert werden. Die Kette 10 kann z.B. als Kreuzgelenklaschen-Kette ausgebildet sein und mit Kugellagerlaufrollen bestückte Trag- und Führungsglieder aufweisen. Die Kette 10 kann beispielsweise mittels eines Schleppkettenantriebs mit Rutschkupplung angetrieben werden. Im gezeigten Beispiel wird die Kette 10 in Richtung des Pfeils 9 bewegt. Vorzugsweise wird die Kette 10 kontinuierlich angetrieben.

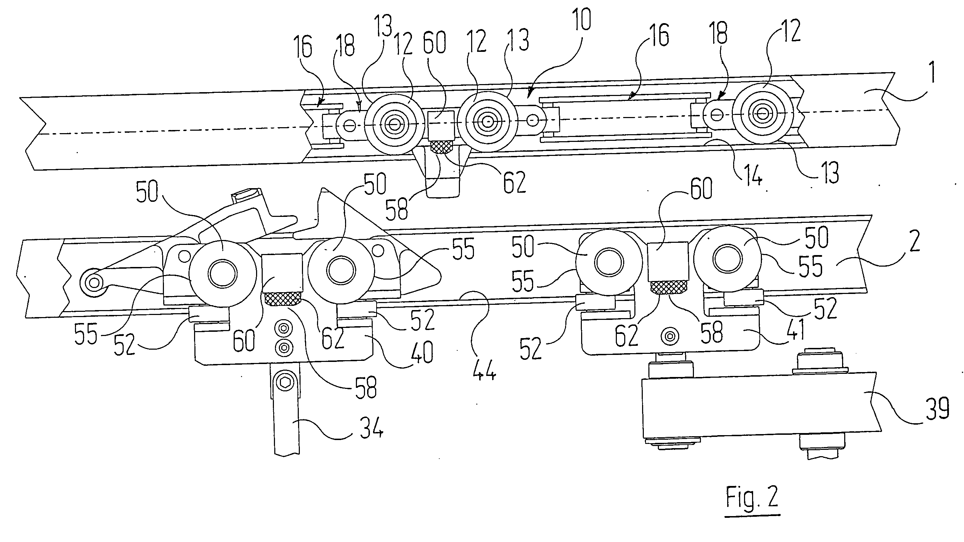

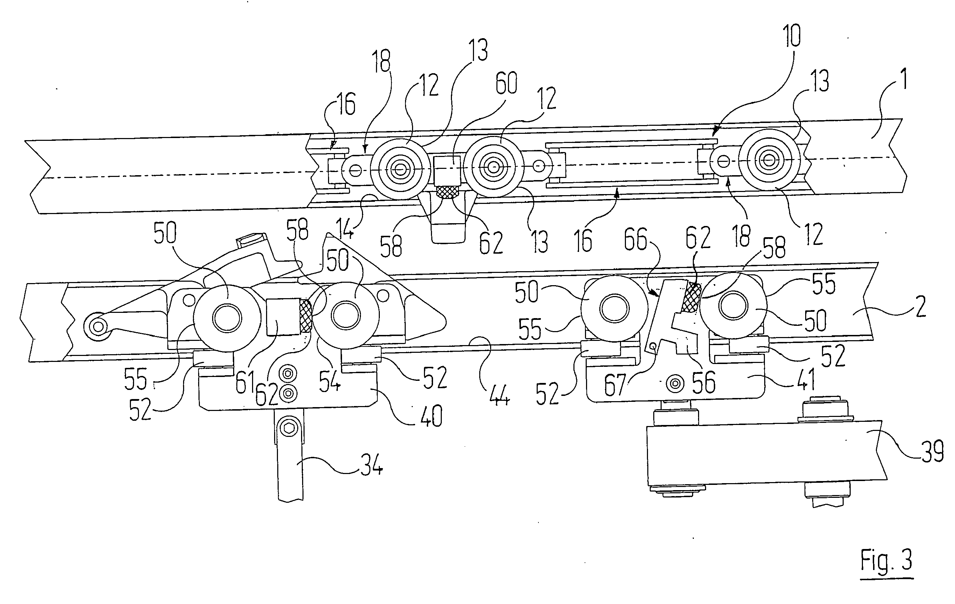

Figuren 2 und 3 zeigen Schmiervorrichtungen, die jeweils eine Applikationsvorrichtung 60, 61, 62 und ein Schmierstoffdepot 62 aufweisen.

Die entlang der Kettenschiene 1 geführte Kette 10 weist mehrere Kettenglieder 16, 18 auf, wobei im gezeigten Beispiel Führungsglieder 16 und Tragglieder 18 in abwechselnder Reihenfolge als Kettenglieder 16, 18 aneinander gereiht sind. Die Führungsglieder 16 können Führungsrollen aufweisen, welche in den Figuren 2 und 3 nicht näher dargestellt sind.

Die Tragglieder 18 der Kette 10 weisen Laufrollen 12 mit Laufflächen 13 auf. Die Laufflächen 13 der Laufrollen 12 werden von einer Lauffläche 14 der Kettenschiene 1 getragen.

Gemäß den Figuren 2 und 3 ist ein Tragglied 18 der Kette 10 als Tragstruktur für eine Applikationsvorrichtung 60 ausgebildet. Das Schmierstoffdepot 62 dieser Applikationsvorrichtung 60 weist eine Kontaktoberfläche 58 zur direkten Schmierung der Lauffläche 14 der Kettenschiene 1 auf.

Die Wagen 40, 41 werden von der Tragschiene 2 getragen und sind entlang dieser bewegbar. Die Wagen 40, 41 sind jeweils mit mehreren Tragrollen 50 mit einer horizontalen Achse ausgestattet, wobei die Tragrollen 50 Laufflächen 54, 55 aufweisen. Die Laufflächen 54, 55 der Tragrollen 50 werden von einer Lauffläche 44 der Tragschiene 2 getragen.

Die Wagen 40, 41 sind jeweils mit mehreren Führungsrollen 52 mit einer vertikalen Achse ausgestattet, wobei die Führungsrollen 52 auf einer vertikalen, seitlichen Führungsfläche des Profils der Tragschiene 2 laufen.

Die Tragrollen 50 und die Führungsrollen 52 der Wagen 40, 41 können auf beiden Seiten des Profils der Tragschiene 2 angeordnet sein, d.h. auch auf der von der Zeichnungsebene abgewandten, nicht sichtbaren Seite des Profils der Tragschiene 2. Im gezeigten Beispiel ist der Zugwagen 40 mit einer Stange 34 verbunden. Unterhalb des Tragwagens 41 ist im gezeigten Beispiel ein Tragelement 39 angeordnet.

Gemäß den Figuren 2 sind sowohl der Zugwagen 40 als auch der Tragwagen 41 jeweils als Tragstruktur für eine Applikationsvorrichtung 60 ausgebildet, wobei das Schmierstoffdepot 62 der Applikationsvorrichtung 60 eine Kontaktoberfläche 58 zur direkten Schmierung der Lauffläche 44 der Tragschiene 2 aufweist.

Bei den in den Figuren 1 bis 3 beispielhaft gezeigten Schmiervorrichtungen mit den Applikationsvorrichtungen 60, 61, 66 wird der feste, vorzugsweise stückig ausgebildete Schmierstoff von der jeweiligen Tragstruktur, d.h. von dem Kettenglied 18 bzw. von dem Wagen 40, 41 mitgeführt. Während die Tragstruktur bewegt wird, erfolgt bei den gezeigten Applikationsvorrichtungen 60, 61, 66 eine kontinuierliche Schmierung, d.h. die Schmierung erfolgt beispielsweise unabhängig davon, ob sich die Tragstruktur auf einem geraden oder auf einem bogenförmig ausgebildeten Abschnitt der Schiene 1, 2 bewegt.

Bei den in Figur 2 beispielhaft gezeigten Applikationsvorrichtungen 60 erfolgt eine direkte Schmierung der Lauffläche 14, 44 einer der Schienen 1 bzw. 2, wobei die Applikationsvorrichtungen 60 den jeweiligen Anforderungen der Schienen 1 bzw. 2 angepasst und unterschiedlich ausgeführt sein können.

Gemäß den in den Figuren 3 gezeigten Beispielen sind sowohl der Zugwagen 40 als auch der Tragwagen 41 jeweils als Tragstruktur für eine Applikationsvorrichtung 61 bzw. 66 ausgebildet, wobei das Schmierstoffdepot 62 der Applikationsvorrichtung 61 bzw. 66 eine Kontaktoberfläche 58 zur Schmierung der Lauffläche 54, 55 eines an der Tragschiene 2 bewegbaren Wagens 40 bzw. 41 aufweist. Derart erfolgt eine indirekte Schmierung der Lauffläche 44 der Tragschiene 2. Diese indirekte Schmierung erfolgt gemäß den gezeigten Beispielen über die Laufflächen 54, 55 der Tragrollen 50.

Bei den in den Figuren 2 und 3 beispielhaft gezeigten Applikationsvorrichtungen 60, 61, 66 ist das Schmierstoffdepot 62 federbelastet ausgebildet. Um den festen Schmierstoff in Richtung der Kontaktoberfläche 58 zu drücken bzw. um eine entsprechende Vorspannung einzustellen, kann eine Applikationsvorrichtung 60, 61, 66 ein in den Figuren 2 und 3 nicht näher dargestelltes Federelement aufweisen. Eine Druckbelastung des Schmierstoffdepots 62 in Richtung der Kontaktoberfläche 58 kann alternativ oder zusätzlich auch Schwerkraft bedingt erfolgen. So weist beispielsweise die in den Figuren 3 gezeigte Applikationsvorrichtung 66, welche dort am Tragwagen 41 angeordnet ist, ein Bauelement 56 auf, dessen Masse ein Andrücken der Kontaktoberfläche 58 des Schmierstoffdepots 62 der Applikationsvorrichtung 66 bewirkt. Dazu ist das genannte Bauelement 56 im gezeigten Beispiel gemeinsam mit dem Schmierstoffdepot 62 der Applikationsvorrichtung 66 um ein Drehgelenk 67 drehbar angeordnet.

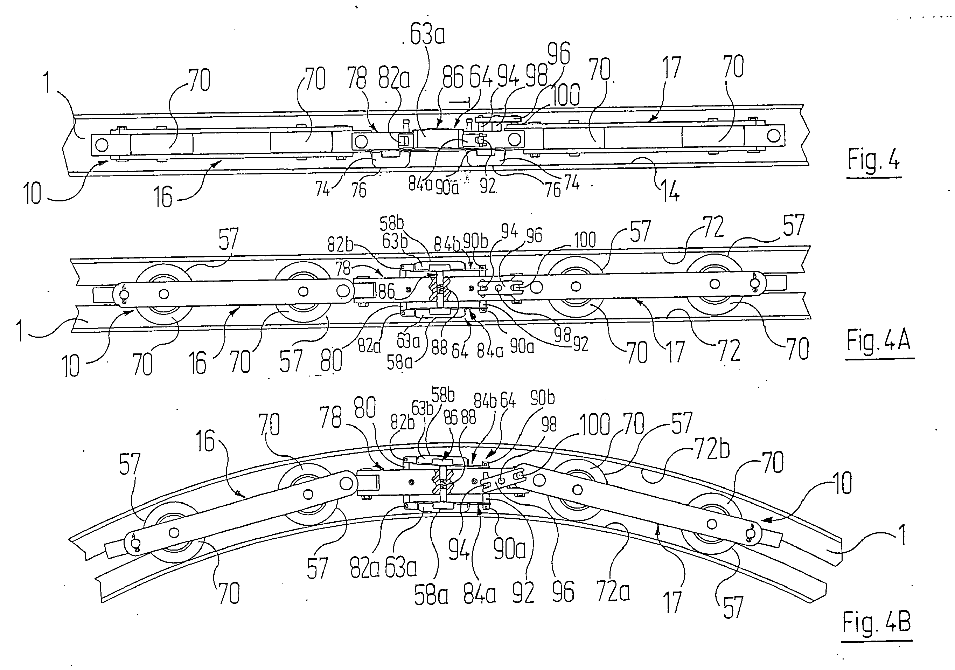

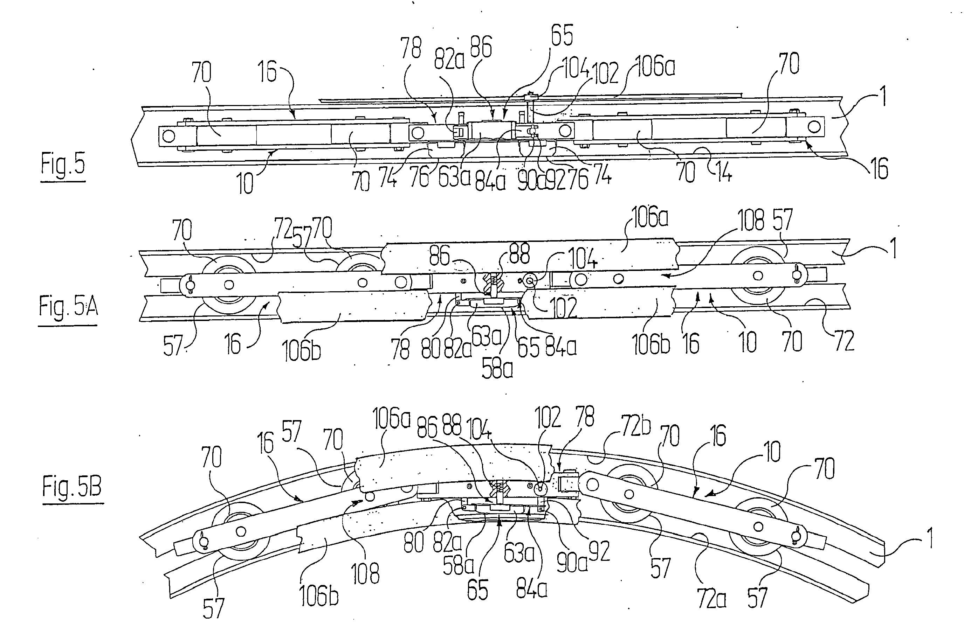

Die Figuren 4, 4A, 4B und 5, 5A, 5B zeigen Ausführungsbeispiele der Schmiervorrichtung für eine Kettenschiene 1 mit einer Kette 10. Die Kette 10 wird entlang der Kettenschiene 1 geführt und kann beispielsweise, wie in den Zeichnungen angedeutet, als Kreuzgelenk-Kette ausgebildet sein. Zwischen zwei Kettengliedern 16, 17, welche als Führungsglieder der Kette 10 ausgebildet sind und welche Führungsrollen 70 aufweisen, ist in den gezeigten Beispielen ein als Tragstruktur für die Schmiervorrichtung ausgebildetes Kettenglied 78 angeordnet. Die Führungsrollen 70 laufen auf vertikalen, seitlichen Führungsflächen 72, 72a, 72b des Profils der Kettenschiene 1. Die Führungsrollen 70 weisen Laufflächen 57 auf, wobei es vorzuziehen ist, beispielsweise im Hinblick auf eine Kurvenführung der Kette 10, Toleranzen zwischen den Laufflächen 57 der Führungsrollen 70 und den Führungsflächen 72, 72a, 72b der Kettenschiene 1 vorzusehen.

Das mit den Applikationsvorrichtungen 64, 65 ausgestattete Kettenglied 78 der Kette 10 weist Laufvorrichtungen 74 mit Laufflächen 76 auf, welche von einer Lauffläche 14 der Kettenschiene 1 getragen werden.

Bei den gezeigten Beispielen einer Schmiervorrichtung mit einem als Tragstruktur ausgebildeten Kettenglied 78, weisen die Applikationsvorrichtungen 64, 65 Aufnahmevorrichtungen 84a, 84b für die Schmierstoffdepots 63a, 63b auf. Die gezeigten Schmierstoffdepots 63a, 63b sind zumindest im Wesentlichen seitlich des Kettenglieds 78 angeordnet. Die Seiten des Kettenglieds 78 sind Führungsflächen 72, 72a, 72b der Kettenschiene 1 zugewendet. Die in den Beispielen als Kettenglied 78 ausgebildete Tragstruktur weist einen Träger 80 für die Aufnahmevorrichtungen 84a, 84b der Schmierstoffdepots 63a, 63b auf. Die Aufnahmevorrichtungen 84a, 84b können relativ zur Tragstruktur bewegt werden, wobei in den gezeigten Beispielen am Träger 80 gelenkige Verbindungen 82a, 82b zum Schwenken der Aufnahmevorrichtungen 84a, 84b mit den Schmierstoffdepots 63a, 63b vorgesehen sind.

Die Figuren 4A und 5A zeigen gerade Abschnitte der Kettenschiene 1. Die Applikationsvorrichtungen 64, 65 befinden sich dabei in einer Ausgangsposition, in welcher keine Schmierstoffabgabe erfolgt.

Die Figuren 4B und 5B zeigen bogenförmige Abschnitte der Kettenschiene 1. Die Applikationsvorrichtungen 64, 65 befinden sich dabei in einer Schmierposition, in welcher Schmierstoff abgegeben wird. In der gezeigten Schmierposition wird die Führungsfläche 72a auf der Bogeninnenseite der Kettenschiene 1 geschmiert, wobei der Führungsfläche 72a Schmierstoff über die Kontaktoberfläche 58a des Schmierstoffdepots 63a zugeführt wird. Die der Bogenaußenseite zugewendete Kontaktoberfläche 58b des Schmierstoffdepots 63b berührt dabei die Führungsfläche 72b auf der Bogenaußenseite der Kettenschiene 1 nicht. Auf diese Weise erfolgt eine gezielte Schmierung der Führungsfläche 72a auf der Bogeninnenseite des bogenförmigen Abschnitts der Kettenschiene 1, wobei diese Führungsfläche 72a höherem Verschleiß ausgesetzt ist als die gegenüberliegende Führungsfläche 72b auf der Bogenaußenseite.

Zur Bewegung der Applikationsvorrichtung 64, 65 relativ zur Tragstruktur, insbesondere zur Veränderung der Lage der Applikationsvorrichtung 64, 65 zwischen der Ausgangsposition und der Schmierposition, ist eine mit einem Führungsstift 94 bzw. 102 ausgestattete Lenkstange 92 vorgesehen. In den gezeigten Beispielen ist die Lenkstange 92 mit den beidseitig des Kettenglieds 78 angeordneten Aufnahmevorrichtungen 84a, 84b für die Schmierstoffdepots 63a, 63b verbunden. Der Führungsstift 94, 102 der Lenkstange 92 ist zwischen den Aufnahmevorrichtungen 84a, 84b angeordnet, wobei sich in beispielhafter Anordnung Endbereiche der Lenkstange 92 über die Aufnahmevorrichtungen 84a, 84b hinaus erstrecken können.

Bei dem Ausführungsbeispiel gemäß den Figuren 4, 4A, 4B ist zwischen dem als Tragstruktur der Schmiervorrichtung ausgebildeten Kettenglied 78 und einem benachbarten Kettenglied 17 ein Koppelelement 96 vorgesehen, welches um ein Drehgelenk 98 drehbar ausgebildet ist. Im gezeigten Beispiel ist das Drehgelenk 98 an dem der Applikationsvorrichtung 64 zugeordneten Kettenglied 78 festgelegt. Der Führungsstift 94 der Lenkstange 92 greift auf einer Seite des Koppelelements 96 in dieses ein. Auf der gegenüberliegenden Seite des Koppelelements 96 greift ein Stift 100 in dieses ein, wobei letzterer Stift 100 von dem benachbarten Kettenglied 17 getragen wird. Das Koppelelement 96 weist auf seiner dem als Tragstruktur der Schmiervorrichtung ausgebildeten Kettenglied 78 zugewendeten Seite eine Ausnehmung für den Führungsstift 94 der Lenkstange 92 auf. Auf seiner dem benachbarten Kettenglied 17 zugewendeten Seite weist das Koppelelement 96 eine Ausnehmung für den Stift 100 des benachbarten Kettenglieds 17 auf. Verändert sich die Lage der Längsachse des als Tragstruktur ausgebildeten Kettenglieds 78 gegenüber der Lage der Längsachse des benachbarten Kettenglieds 17, wie dies beispielsweise bei einer Bewegung der Kette 10 längs eines bogenförmigen Schienenabschnitts der Fall ist, bewegt das Koppelelement 96 den Führungsstift 94 relativ zur Tragstruktur. Derart bewirkt das Koppelelement 96 über den auf der Lenkstange 92 angeordneten Führungsstift 94 eine Veränderung der Lage der Applikationsvorrichtung 64 gegenüber dem als Tragstruktur ausgebildeten Kettenglied 78.

Bei dem Ausführungsbeispiel gemäß den Figuren 5, 5A, 5B begrenzen stationäre Führungselemente 106a, 106b eine Führungsgasse 108 für den Führungsstift 102 der Lenkstange 92. Die Führungselemente 106a, 106b können beispielsweise als Führungsbleche ausgebildet sein und können zumindest abschnittsweise beidseitig der Kettenschiene 1 festgelegt sein. Die Anordnung und Breite der Führungsbleche bedingt dabei die Ausbildung der Führungsgasse 108. Im gezeigten Beispiel ist am Führungsstift 102 eine Führungsrolle 104 vorgesehen, welche in der Führungsgasse 108 geführt wird. Durch entsprechende Ausbildung der Führungsgasse 108 kann die Lage der Applikationsvorrichtung 65 über den auf der Lenkstange 92 angeordneten Führungsstift 102 gezielt verändert werden. Bei einer alternativen Ausführungsform können die Führungselemente 106a, 106b motorisch verstellbar ausgebildet sein. Dadurch kann eine zeitlich gesteuerte Aktivierung der Schmierfunktion ermöglicht werden, indem die Führungselemente 106a, 106b beispielsweise in regelmäßigen Abständen an die Führungsrolle 104 herangeführt werden.

Bei dem in den Figuren 5, 5A, 5B gezeigten Ausführungsbeispiel kann beidseitig des als Tragstruktur der Schmiervorrichtung ausgebildeten Kettenglieds 78 ein beliebiges Kettenglied 16 vorgesehen sein. Anders als beim dem in den Figuren 4, 4A, 4B gezeigten Ausführungsbeispiel kann hier auf die Verwendung eines angepassten, mit einem Stift 100 ausgestatteten, benachbarten Kettenglieds 17 verzichtet werden.

Die in den Figuren 4, 4A, 4B, 5, 5A, 5B und 7 gezeigten Applikationsvorrichtungen 64, 65, 68, 69 sind mit einem Federelement 88 ausgestattet, welches den Schmierstoff druckbelastet. Das Federelement 88 ist Teil einer Anordnung 86 zum Nachführen von Schmierstoff, welche Anordnung 86 die Schmierstoffdepots 63a, 63b in Richtung der Kontaktoberflächen 58a, 58b druckbelastet. Gegenwirkend zu dieser Anordnung 86 sind in den gezeigten Beispielen Sicherungsmittel vorgesehen, die verhindern, dass sich ein Schmierstoffdepot 63a, 63b von der Applikationsvorrichtung 64, 65, 68, 69 löst. Dies kann beispielsweise dann erforderlich sein, wenn die Kontaktoberfläche 58b eines Schmierstoffdepots 63b auf der Bogenaußenseite bei der Bewegung durch einen bogenförmigen Schienenabschnitt nicht an der zugeordneten Führungsfläche 72b der Kettenschiene 1 anliegt. In den gezeigten Beispielen sind als Sicherungsmittel Splinte 90a, 90b an der Lenkstange 92 vorgesehen, welche die Aufnahmevorrichtungen 84a, 84b für die Schmierstoffdepots 63a, 63b sichern. In den gezeigten Beispielen sind die Splinte 90a, 90b an Endbereichen der Lenkstange 92 angeordnet.

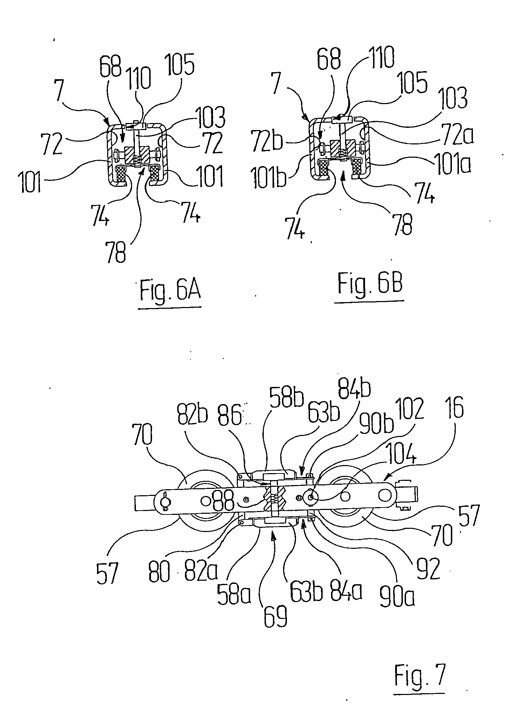

Das in den Figuren 6A, 6B gezeigte Ausführungsbeispiel betrifft eine Schmiervorrichtung mit einem Kettenglied 78, das gemäß dem gezeigten Beispiel Laufvorrichtungen 74 aufweist, die von einer Kettenschiene 7 getragen werden. Das Kettenglied 78 trägt eine Applikationsvorrichtung 68, die ähnlich wie bereits im Zusammenhang mit den Figuren 5, 5A, 5B beschrieben ausgebildet und angeordnet sein kann. Ebenfalls in ähnlicher Ausführung wie bei den Figuren 5, 5A, 5B ist auch bei dem Ausführungsbeispiel gemäß den Figuren 6A, 6B ein Führungsstift 103 mit einer Führungsrolle 105 vorgesehen. Der Führungsstift 103 wird dabei mittels der Führungsrolle 105 in einer Führungsgasse geführt. Das in den Figuren 6A, 6B gezeigte Ausführungsbeispiel sieht vor, dass die Führungsgasse durch die Kettenschiene 7 selbst begrenzt wird, was eine kompaktere und gewichtsreduzierte Ausführung begünstigt. Die Führungsgasse ist dabei als Führungsöffnung 110 der Kettenschiene 7 ausgebildet. Mittels der als Führungsöffnung 110 der Kettenschiene 7 ausgebildeten Führungsgasse kann die Lage der Applikationsvorrichtung 68 über den Führungsstift 103 eingestellt werden. Insbesondere kann die Lage der Applikationsvorrichtung 68 zwischen einer Ausgangsposition und einer Schmierposition verändert werden.

Figur 6A zeigt das Kettenglied 74 zwischen den Seitenelementen 101 eines geraden Schienenabschnitts, wobei sich die Applikationsvorrichtung 68 in einer Ausgangsposition zwischen den Führungsflächen 72 der Kettenschiene 7 befindet, in welcher Ausgangsposition keine Schmierung der Führungsflächen 72 erfolgt.

Figur 6B zeigt das Kettenglied 74 zwischen den Seitenelementen 101a, 101b eines bogenförmigen Schienenabschnitts, wobei sich die Applikationsvorrichtung 68 in einer Schmierposition befindet. In der gezeigten Schmierposition erfolgt eine Schmierung der Führungsfläche 72a des als Innenbogen ausgebildeten Seitenelements 101a der Kettenschiene 7. Gleichzeitig erfolgt keine Schmierung der Führungsfläche 72b des als Außenbogen ausgebildeten Seitenelements 101b der Kettenschiene 7.

Figur 7 zeigt eine Schmiervorrichtung, welche in ein Kettenglied 16 mit Führungsrollen 70 integriert ist. Die Führungsrollen 70 weisen Laufflächen 57 auf, welche auf Führungsflächen eines Schienenprofils laufen können. Das Kettenglied 16 ist als Tragstruktur für die Applikationsvorrichtung 69 ausgebildet. Im Übrigen kann die Schmiervorrichtung gemäß Figur 7 zumindest weitestgehend ähnlich der im Zusammenhang mit den Figuren 5, 5A, 5B beschriebenen Schmiervorrichtung aufgebaut sein.

Zur Ausbildung des festen Schmierstoffs des in den Figuren 2 bis 7 gezeigten Schmierstoffdepots 62, 63a, 63b der Applikationsvorrichtungen 60, 61, 64, 65, 66, 68, 69 können beispielsweise ein oder mehrere der folgenden Substanzen verwendet werden: Graphit, Molybdänsulfid, Wolframdisulfid, Polytetrafluorethylen, Tricalciumphosphat, Calciumhydroxid, Polyethylen, Polyamid. Als Beimischungen verwendet werden können beispielsweise Weichmetalle, z. B. Kupfer, Blei, Antimon, Aluminium, Keramikpartikel und/oder Kunststoffe, wobei diese Beimischungen vorzugsweise feinst verteilt vorliegen. Der Schmierstoff des Schmierstoffdepots 62, 63a, 63b ist vorzugsweise stückig ausgebildet.

Ein Gedanke, welcher der Erfindung zugrunde liegt, lässt sich wie folgt zusammenfassen: Die vorliegende Erfindung betrifft eine Schmiervorrichtung für ein schienengestütztes Fördersystem 5, wobei die Schmiervorrichtung mindestens eine Applikationsvorrichtung 60, 61, 64, 65, 66, 68, 69 mit mindestens einem Schmierstoffdepot 62, 63a, 63b aufweist, wobei die Schmiervorrichtung eine mobile Tragstruktur für die Applikationsvorrichtung 60, 61, 64, 65, 66, 68, 69 aufweist, wobei das Schmierstoffdepot 62, 63a, 63b als fester Schmierstoff ausgebildet ist, und wobei das Schmierstoffdepot 62, 63a, 63b druckbelastet angeordnet ist und eine Kontaktoberfläche 58, 58a, 58 zur Abgabe des festen Schmierstoffs aufweist. Die Erfindung betrifft auch ein Fördersystem 5 mit mindestens einer entlang einer Kettenschiene 1, 7 geführten Kette 10, welche mit einer derartigen Schmiervorrichtung ausgestattet ist. Erfindungsgemäß werden Schmierstoff bedingte Verschmutzungen reduziert sowie Installation und Inbetriebnahme vereinfacht.

## Patentansprüche

1. Schmiervorrichtung für ein schienengestütztes Fördersystem (5), welche mindestens eine Applikationsvorrichtung (60, 61, 64, 65, 66, 68, 69) mit mindestens einem Schmierstoffdepot (62, 63a, 63b) aufweist,
**dadurch gekennzeichnet, dass**
a) die Schmiervorrichtung eine mobile Tragstruktur für die Applikationsvorrichtung (60, 61, 64, 65, 66, 68, 69) aufweist;
b) das Schmierstoffdepot (62, 63a, 63b) als fester Schmierstoff ausgebildet ist, wobei das Schmierstoffdepot (62, 63a, 63b) druckbelastet angeordnet ist und eine Kontaktoberfläche (58, 58a, 58b) zur Abgabe des festen Schmierstoffs aufweist.

2. Schmiervorrichtung nach Anspruch 1, **dadurch gekennzeichnet, dass** die Applikationsvorrichtung (60, 61, 64, 65, 66, 68, 69) ein Federelement (88) aufweist, welches das Schmierstoffdepot (62, 63a, 63b) in Richtung der Kontaktoberfläche (58, 58a, 58b) druckbelastet.

3. Schmiervorrichtung nach Anspruch 1 oder 2, **dadurch gekennzeichnet, dass** die Applikationsvorrichtung (60, 61, 64, 65, 66, 68, 69) mit einem Bauelement (56) ausgestattet ist, dessen Masse eine Druckbelastung des Schmierstoffdepots (62, 63a, 63b) in Richtung der Kontaktoberfläche (58, 58a, 58b) bewirkt.

4. Schmiervorrichtung nach einem der Ansprüche 1 bis 3,
**dadurch gekennzeichnet, dass** die Tragstruktur eine oder mehrere Laufflächen (13, 54, 55, 76) aufweist.

5. Schmiervorrichtung nach Anspruch 4, **dadurch gekennzeichnet, dass** die Kontaktoberfläche (58) des Schmierstoffdepots (62) zumindest teilweise an mindestens einer der ein oder mehreren Laufflächen (54, 55) anliegt.

6. Schmiervorrichtung nach einem der Ansprüche 1 bis 5,
**dadurch gekennzeichnet, dass** die Lage der Applikationsvorrichtung (64, 65, 68, 69) gegenüber der Tragstruktur zwischen mindestens einer Ausgangsposition und mindestens einer Schmierposition veränderbar ist.

7. Schmiervorrichtung nach Anspruch 6, **dadurch gekennzeichnet, dass** die Applikationsvorrichtung (64, 65, 66, 68, 69) gegenüber der Tragstruktur schwenkbar ist.

8. Schmiervorrichtung nach Anspruch 6 oder 7, **dadurch gekennzeichnet, dass** die Tragstruktur zum Einstellen der Lage der Applikationsvorrichtung (64, 65, 68, 69) einen Führungsstift (94, 102, 103) aufweist.

9. Schmiervorrichtung nach Anspruch 8, **dadurch gekennzeichnet, dass** eine Lenkstange (92) und eine Aufnahmevorrichtung (84a, 84b) für das mindestens eine Schmierstoffdepot (63a, 63b) vorgesehen sind, wobei der Führungsstift (94, 102, 103) an der Lenkstange (92) angeordnet ist, und wobei die Aufnahmevorrichtung (84a, 84b) mittels der Lenkstange (92) bewegt werden kann.

10. Schmiervorrichtung nach Anspruch 8 oder 9, **dadurch gekennzeichnet, dass** ein Koppelelement (96) vorgesehen ist, in welches der Führungsstift (94) derart eingreift, dass die Lage des Führungsstifts (94) gegenüber der Tragstruktur in Abhängigkeit einer Bewegung der Tragstruktur eingestellt wird.

11. Schmiervorrichtung nach Anspruch 10, **dadurch gekennzeichnet, dass** der Führungsstift (102, 103) mit einer Führungsrolle (104, 105) versehen ist, die in einer stationären Führungsgasse (108) führbar ist.

12. Schmiervorrichtung nach einem der Ansprüche 1 bis 11,
**dadurch gekennzeichnet, dass** die mobile Tragstruktur schienengeführt in dem Fördersystem (5) bewegbar ausgebildet ist.

13. Schmiervorrichtung nach einem der Ansprüche 1 bis 12,
**dadurch gekennzeichnet, dass** die Tragstruktur als schienenführbarer Wagen (40, 41) ausgebildet ist.

14. Schmiervorrichtung nach einem der Ansprüche 1 bis 12,
**dadurch gekennzeichnet, dass** die Tragstruktur als Kettenglied (16, 18, 78) ausgebildet ist.

15. Fördersystem (5) mit mindestens einer Kettenschiene (1, 7), entlang der eine Kette (10) geführt ist, **dadurch gekennzeichnet, dass** die Kette (10) mit einer Schmiervorrichtung nach Anspruch 14 ausgestattet ist.

16. Fördersystem (5) nach Anspruch 15, **dadurch gekennzeichnet, dass** die mindestens eine Kettenschiene (1) ein oder mehrere Führungselemente (106a, 106b) aufweist, mit deren Hilfe die Lage der Applikationsvorrichtung (65, 69) gegenüber der Tragstruktur einstellbar ist.

17. Fördersystem (5) nach Anspruch 15, **dadurch gekennzeichnet, dass** das Profil der mindestens einen Kettenschiene (7) eine Führungsöffnung (110) ausbildet, mit deren Hilfe die Lage der Applikationsvorrichtung (68) gegenüber der Tragstruktur einstellbar ist.
